# EUROPEAN PATENT APPLICATION

(11) **EP 2 388 897 A1**
(43) Date of publication of application: **23.11.2011**
(21) Application number: 10163512.6
(22) Date of filing: 21.05.2010
(51) Int. Cl.: H02K 21/14, B60K 6/52

(54) **A torque amplifier apparatus**

(71) Applicant: May, Peter Andrew John, South Perth, Western Australia 6151 (AU)
(72) Inventor: May, Peter Andrew John, South Perth, Western Australia 6151 (AU); May, Jo-Anne, South Perth, Western Australia 6151 (AU); May, Denver, South Perth, Western Australia 6151 (AU); May, Billie, South Perth, Western Australia 6151 (AU)
(74) Representative: Wildhack & Jellinek

(57) **Abstract**

A torque amplifying apparatus mounted to a non-driven component of a vehicle comprising of a plurality of permanent armature magnets and a plurality of electromagnets, the permanent armature magnets being arranged to interact with a plurality of electromagnets.

## Description

The present invention relates to a torque amplifier apparatus.

As fuel prices have increased, the need to improve fuel efficiency or lessen fuel requirements of a vehicle is ever more important.

The present invention relates to a torque amplifier apparatus which, when applied to a non-driven component of a vehicle, overcomes at least in part problems associated with fuel consumption.

In accordance with one aspect of the invention there is provided a torque amplifier apparatus mounted to a non-driven component of a vehicle comprising a plurality of permanent magnets arranged to interact with a plurality of electromagnets.

The present invention will now be described, by way of example, with reference to the accompanying drawings, in which:
Figure 1 is a schematic view of an apparatus according to the present invention mounted to a disc fitted to a non-driven wheel of a vehicle;
Figure 2 is a schematic block diagram representation of an electrical circuit used in the present invention; and
Figure 3 is a schematic cross-sectional view of the apparatus of Figure 1 mounted to a non-driven wheel of a vehicle.

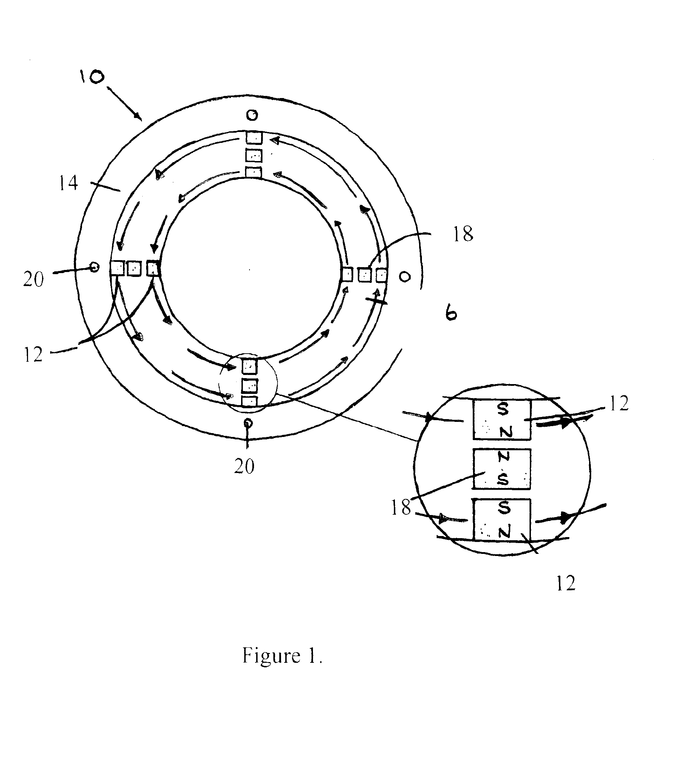

Referring to the Figure 1, there is shown an apparatus 10 in accordance with the present invention, comprising a plurality of permanent armature magnets 12. The permanent armature magnets 12 are mounted on a periphery disc 14, axle or hub. The permanent armature magnets 12 are all evenly spaced from one another. The number of permanent armature magnets 12 will be determined by the size of the vehicle

On a disc 16 connected to a shaft of the vehicle is a plurality of electromagnets 18. The electromagnets 18 are spaced evenly apart from each other. Further, the electromagnets 18 are activated by magnetic sensors 20 such as hall sensors. The permanent armature magnets 12 are arranged to have opposing poles facing the opposite permanent armature magnet 12, the electromagnet 18 being arranged to have like poles facing the like poles of the permanent armature magnets 12 as shown in the inset of Figure 1 when activated.

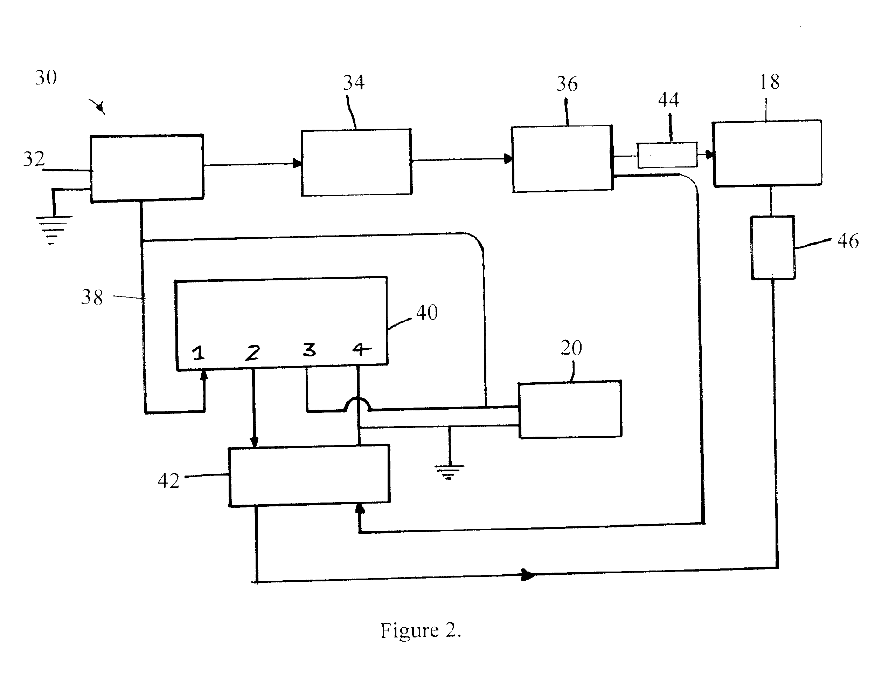

In Figure 2, there is a shown a schematic block diagram representation of an electrical circuit 30 of the apparatus of the present invention. A power supply 32 such as an automotive power supply has two outputs. The first output of the power supply 32 is connected to a first power inverter 34. The power supply 32 may be a 24V power supply and may be composed of two 12V batteries. The power inverter 34 is connected in series to a second power inverter 36. The output of the second power inverter 36 supplies a current to the electromagnets 18.

The power supply 32 has a second output which is a half voltage supply line 38. Further, the supply line 38 feeds into a first input/outpoint point on a normally closed relay 40.

The supply line 38 also feeds voltage to the magnetic sensor 20.

A second input/output point of the normally closed switching relay 40 feeds a first input point of a normally open solid state timer relay (STR) 42. A third input/output point of the normally closed relay 40 connects to the magnetic sensor 20. A fourth input/output point of the normally closed relay 40 feeds into a second negative input of the normally open solid STR 42 and a negative input of the magnetic sensor 20. A third output of the STR 42 connects to the electromagnets 18. The second inverter 36 feeds current to a fourth input of the normally open STR 42 which accepts current from the second inverter 36.

Additionally at least one capacitor 44 may be fitted within the circuit between the second power inverter 36 and the electromagnets 18 to aid in the delivery of the peak current drawn by the electromagnets 18. A sink circuit 46 comprising at least one diode may be coupled to the electromagnets 18 to negate the effects of back electro-motive force (EMF). The sink circuit 46 may also comprise at least one capacitor coupled with the at least one diode for storing energy created by the back EMF, created by the motion of the permanent armature magnets and the collapsing electrical field of the electromagnet 18 when the current to the electromagnet 18 is switched off.

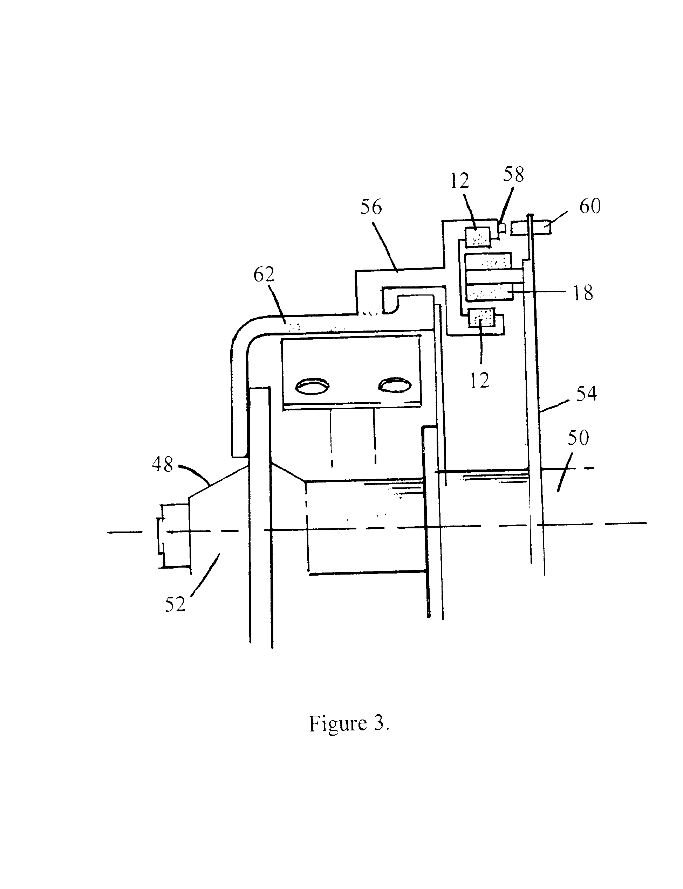

In Figure 3, there is shown a cross section of the apparatus of the present invention mounted to a non-driven wheel unit 48 of a vehicle. An axle 50 joins to a hub 52. From the axle 50, an axle beam 54 extends upwards. The axle beam 54 has a plurality of electromagnets 18 attached to radially extending axle beams (not shown). An arm 56 extends from a brake drum 62 of the non-driven wheel 48. The arm 56 has multiple permanent armature magnets 12 fitted in a 'U' arrangement. This arrangement allows the electromagnet 18 to be passed by the permanent armature magnets 12 on rotation of the non-driven wheel 48. A magnet switch 58, is attached to the arm 56, and is located opposite a magnetic pick-up switch 60, which is fitted to the axle beam 54.

In use, a large current is drawn from a relatively low voltage supply, by way of the circuit shown in Figure 2. Once a minimum activation speed is reached and as the plurality of permanent armature magnets 12 pass over a magnetic sensor 20, a signal is sent to the normally closed relay 40 to energise an individual electromagnet 18 by way of discrete current pulse. The magnetic field of the electromagnet 18 in turn interacts with the magnetic field of the permanent armature magnets 12. The interaction of the electromagnet 18 and the permanent armature magnets 12 causes a repulsion force between the permanent armature magnets 12 and the electromagnets 18. This repulsion creates a force in the direction of motion thereby supplying torque to the non-driven wheel, reducing fuel consumption of the vehicle.

The electromagnets 18 are switched on and off periodically via the solid state relay 40 in order to generate an electromagnetic force when in close proximity to the permanent armature magnets 12. This force repels the permanent armature magnets 12 attached to the wheel unit 48 and generates an amplified torque in relation to its existing rotation. As the wheel unit 48 is already rotating due to the driving force generated by the vehicle's engine, there is no need to overcome static friction, so all the force generated by the torque amplifier apparatus 10 goes directly into driving the non-driven wheel 48. Activation of brakes on the driving vehicle will send a signal to disengage the electromagnets 18.

The arrangement of the permanent armature magnets 12 and the electromagnets 18 is such that the back EMF created by the motion of the permanent magnets 12 and their magnetic field through the coils of the electromagnets 18 will remain below that of the potential difference of the power supply 32. The torque amplifier apparatus 10 therefore never reaches a steady state condition, in use, where the supply voltage and the back EMF are equal. This arrangement is such that the power supply 32 is able to maintain low-voltage operation regardless of the operational speed of the non-driven component.

The present invention is envisaged to be applicable to non-driven axles in a wide variety of circumstances including two and four wheel trailers, semi-trailer wheels and caravan wheels.

Modifications and variations as would be apparent to a skilled addressee are deemed to be within the scope of the present invention.

## Claims

1. A torque amplifying apparatus mounted to a non-driven component of a vehicle comprising of a plurality of permanent armature magnets and a plurality of electromagnets, the permanent armature magnets arranged to interact with a plurality electromagnets.

2. A torque amplifying apparatus according to claim 1, wherein an electrical circuit is arranged to control the electrical current supplied to the plurality of electromagnets.

3. A torque amplifying apparatus according to claim 1, wherein the permanent armature magnets are mounted on the periphery disc, axle or hub of a non-driven component of a vehicle.

4. A torque amplifying apparatus according to claim 1, wherein attached to the axle are a plurality of axle beams radially extending from the axle, wherein the plurality of electromagnets are attached to the axle beams.

5. A torque amplifying apparatus according to any of the previous claims, wherein the plurality of permanent armature magnets are evenly spaced around the non-driven component.

6. A torque amplifying apparatus according to any of the previous claims, wherein the plurality of electromagnets are evenly spaced around the non-driven component of the vehicle.

7. A torque amplifying apparatus according to claim 2, wherein the electrical circuit comprises a power supply with two outputs, the first output is connected to a first power inverter which is coupled to a second power inverter, the output of the second power inverter coupled to the electromagnets, the second output connected to electronic switching means for control of current supplied to the electromagnets.

8. A torque amplifying apparatus according to claim 7, wherein the electrical circuit operates in response to inputs received through magnetic sensors.

9. A torque amplifying apparatus according to claim 8, wherein the magnetic sensors are Hall Effect sensors.

10. A torque amplifying apparatus according to claim 7, wherein at least one capacitor is arranged between the second power inverter and the electromagnets to supply the peak current draw of the electromagnets.

11. A torque amplifying apparatus as according to claim 7, wherein the electrical circuit comprises a sink circuit comprising of at least one diode coupled between the electromagnets and the electronic switching means to dissipate the back EMF caused through motion of the permanent armature magnets.

12. A torque amplifying apparatus according to claim 11 wherein, the sink circuit also comprises at least one capacitor, coupled with the diode to capture electrical energy generated by the back EMF.
